# EUROPEAN PATENT APPLICATION

(11) **EP 0 938 224 A2**
(43) Date of publication of application: **25.08.1999**
(21) Application number: 98308983.0
(22) Date of filing: 03.11.1998
(51) Int. Cl.: H04M 3/54, H04M 3/56

(54) **Call forwarding via three-way calling**

(30) Priority: 06.11.1997 US 63989 P; 20.05.1998 US 81687
(71) Applicant: LUCENT TECHNOLOGIES INC., Murray Hill, New Jersey 07974-0636 (US)
(72) Inventor: Cannon, Joseph M., Harleysville, Montgomery, PA 19438 (US); Davis, Paul Joseph, Wayne, Chester, PA 19087 (US); Johanson, James A., Macungie, Lehigh, PA 18062 (US)
(74) Representative: Buckley, Christopher Simon Thirsk

(57) **Abstract**

A customer premise equipment (CPE) (105) is adapted to take advantage of a three-way calling feature in order to forward incoming calls on a flexible and less expensive basis. Thus, according to one embodiment of the invention, a method of automatically forwarding an incoming call in a CPE includes the steps of temporarily placing the incoming call in a hold status, calling a forwarding number, and retrieving the incoming call from the hold status to connect the incoming call to the forwarding number. In an alternative embodiment, a CPE includes a flash unit adapted to place an incoming call into a hold status, and a calling unit (113) adapted to call a forwarding number based on call related information associated with the incoming call.

## Description

### Cross-reference To Related Applications:

This application is related to copending U.S. Patent Application No. , entitled "Call Forwarding Via A 2-Line Phone," (Cannon 2-3-5-6) co-filed herewith and incorporated herein by reference.

### Field of the Invention:

This invention is related to call forwarding, and in particular to a method and apparatus to enable call forwarding from a telephone for which a three-way calling feature is enabled.

### Background of the Invention:

Call forwarding is an optional service provided by some telephone service providers which, for a fee, enables a telephone subscriber to arrange for incoming calls to be forwarded to a forwarding number. In a typical scenario, the telephone subscriber will enable the call forwarding service through a keypad on the telephone subscriber's telephone (also known as "customer premise equipment" (CPE)). This enablement will cause the telephone service provider to readdress calls originally destined for the telephone subscriber's telephone to instead be addressed to a telephone specified by the telephone subscriber. For example, if a user of this service is about to leave the user's home to travel to the user's office, the user can engage the service by pressing a predetermined code on a keypad of the user's home telephone. In response to the signal created by this keypad activation, the telephone service provider may prompt the user to enter a forwarding number. Subsequently, the telephone service provider, through a central switch network (also known as "central office"), will cause telephone calls to the user's home telephone number to instead be connected to the user's work telephone number.

From the perspective of the user, conventional call forwarding as described above is inefficient and costly. For example, conventional call forwarding can only be initiated or terminated from the user's telephone. Thus, for example, if the user forgets to "set" call forwarding before leaving home, the user's calls will not be forwarded. Further, if the user changes location while away from the user's phone, conventional call forwarding does not allow the user to "reset" the call forwarding feature to forward calls to a different forwarding number. Also, conventional call forwarding does not allow for discrimination between incoming calls to forward individual calls to different destinations based on call related information such as caller ID data. Finally, conventional call forwarding is expensive, requiring the user to pay a monthly and/or per-call premium.

### Summary of the Invention:

According to one aspect of the invention, a customer premise equipment (CPE) is adapted to take advantage of a three-way calling feature in order to forward incoming calls on a flexible and less expensive basis. Thus, according to one embodiment of the invention, a method of automatically forwarding an incoming call in a CPE includes the steps of temporarily placing the incoming call in a hold status, calling a forwarding number, and retrieving the incoming call from the hold status to connect the incoming call to the forwarding number. In an alternative embodiment, a CPE includes a flash unit adapted to place an incoming call into a hold status, and a calling unit adapted to call a forwarding number based on call related information associated with the incoming call.

### Brief Description of the Drawing:

Figure 1 is a simplified block diagram of a customer premise equipment according to the invention; and
Figure 2 is a flowchart showing an exemplary method of operation for the customer premise equipment shown in Figure 1.

### Detailed Description:

Three-way calling is a feature offered by telephone service providers for a monthly or per-call premium. Three-way calling enables a user (first party) engaged in a telephone conversation with a second party to grant access to the conversation to a third party. In a typical example, to initiate three-way calling the first party flashes the first party's telephone by briefly pressing a switch-hook (also known as a "flash-hook"), temporarily placing the call with the second party into a hold status. The first party then places an outgoing call to the third party. After the call is established with the third party, the first party again flashes the first party's phone, resulting in a three-way conversation between the first, second and third parties.

The present invention takes advantage of the three-way calling feature to enable a user whose phone service includes the three-way calling feature to also automatically obtain call forwarding in a manner which is transparent to the telephone service provider. In addition to saving the user the additional fee associated with the call forwarding feature, the present invention provides the user advantages over the conventional call forwarding feature provided by the telephone service providers. For example, with call forwarding implemented according to the present invention, the user can remotely program call forwarding. Further, the present invention enables call forwarding decisions based on call related information, such as caller ID data.

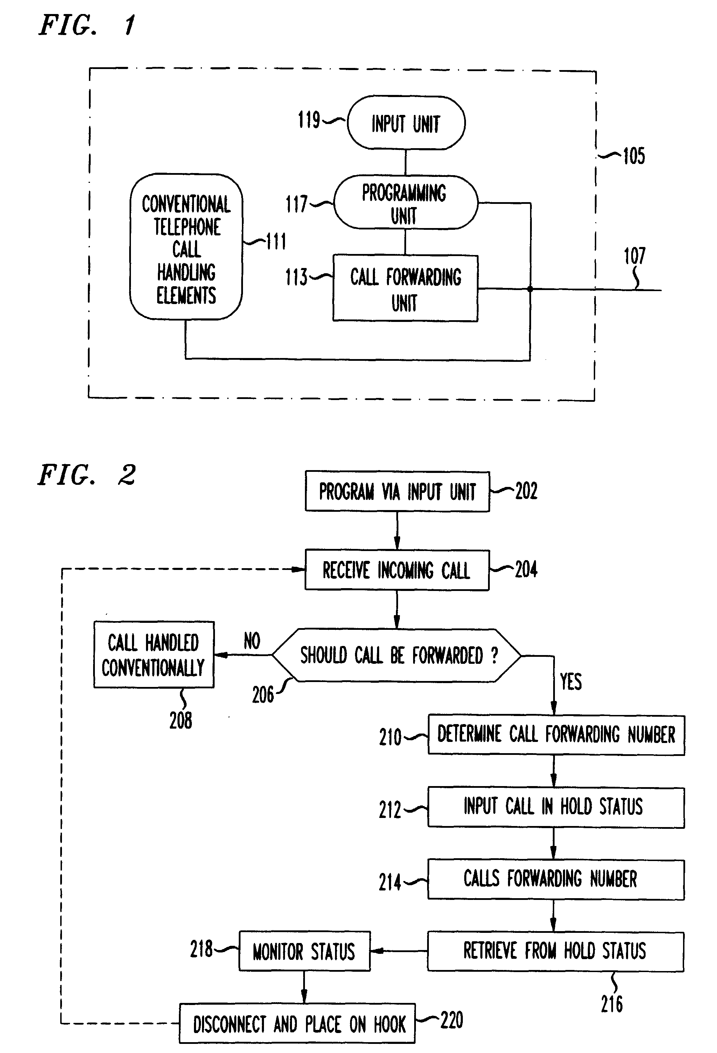

Figure 1 is a simplified block diagram of a CPE, such as a telephone or answering machine, configured according to the invention. Telephone 105 is coupled to telephone line 107. Although referred to herein as a "line", it is understood that telephone line 107 may be a wireless, as opposed to a wired, connection to the central switch network. It is further understood that telephone line 107 could be a digital line, such as an ISDN line. It is also understood that although a single line 107 is shown in the illustrative embodiment, any number of lines may be provided to telephone 105, and that telephone 105 may be able to forward calls received on any of the lines according to the invention.

Line 107 is coupled to conventional telephone call handling elements 111 for placing and receiving telephone calls in a conventional manner. In addition, line 107 is also coupled to call forwarding unit 113, and is also coupled to programming unit 117. According to the invention, call forwarding unit 113 temporarily places an incoming call received on line 107 in a hold status, calls a forwarding number on line 107, and then retrieves the incoming call from hold status to connect the incoming call to the forwarding number. For example, in one embodiment, call forwarding unit 113 evaluates caller ID data associated with the incoming call received on line 107, and calls the forwarding number on line 107 based on this evaluation.

Call forwarding unit 113 may be realized as part of a processor, such as an integrated circuit digital signal processor (DSP). Such a DSP may also include a portion or all of the conventional telephone call handling elements 111. Thus, in one embodiment according to the invention, a DSP configured to support conventional telephone call handling functions is further configured to provide for call forwarding according to the invention. The configuration of call forwarding unit 113 with the conventional telephone call handling elements 111 into a single processor is purely by way of example and not of limitation. Other configurations are also possible. For example, the conventional telephone call handling elements 111 can be incorporated into one processor, such as a single chip integrated DSP, and the call forwarding unit 113 can be incorporated into another processor. Further, although the conventional telephone call handling elements 111 are shown incorporated into telephone 105, it is understood that some of these elements, such as telephone answering machine elements, may be physically incorporated into a separate package coupled to telephone 105.

According to another embodiment, call forwarding unit 113 is coupled to or integrated with a programming unit 117. The programming unit 117 provides a vehicle for a user to change programming of the call forwarding unit. For this purpose, programming unit 117 may be coupled to an input unit 119. Programming unit 117 may alternatively or additionally be coupled to line 107.

Input unit 119 may take the form of a computer connected to telephone 105 through an input/output port, or through some other connection, such as an optical, magnetic, acoustic or metallic connection. In its simplest form, however, input unit 119 may take the form of a keypad that is incorporated into telephone 105 and that can be configured to be in a programming mode. For example, a user can press a predetermined sequence of keys on the keypad to enter the programming mode. Alternatively, a specific key can be provided for entering and exiting the programming mode. Via the input unit 119 and programming unit 117, a user programs the call forwarding unit by, for example, entering a forwarding number to which incoming calls are to be forwarded and by entering a command to set the call forwarding feature.

In an exemplary embodiment, the programming available via input unit 119 and programming unit 117 may also include the entry of specific call related information for use by call forwarding unit 113 to determine whether an incoming call is to be forwarded. For example, a user can program call forwarding unit 113 to only forward certain telephone calls based on an analysis of call related information, such as caller ID data, associated with the incoming calls. Calls that do not meet the forwarding criteria, according to this example, are handled in a conventional manner by conventional telephone call handling elements 111. Thus, for example, a user can program call forwarding unit 113 to forward calls received from a particular telephone number, and to have all other calls handled by exemplary answering machine elements of the conventional telephone call handling elements 111.

The programming available via input unit 119 and programming unit 117 may also include the opportunity to provide different forwarding numbers for different incoming callers based on call related information, such as caller ID data. Thus, for example, a user can program call forwarding unit 113 so that calls received from a first incoming caller are forwarded to a first forwarding number, and calls received from a second incoming caller are forwarded to a second forwarding number. The use of two separate incoming callers and two correspondingly separate forwarding numbers is purely by way of example and not of limitation. In practice, any number of forwarding numbers may be supported, and a user can establish any number of incoming callers for which forwarding is enabled to any of the forwarding numbers.

The above examples are based on a default situation wherein no forwarding occurs such that the user enables forwarding for specifically known incoming callers based, for example, on an analysis of caller ID data associated with incoming calls. Alternatively, the default condition may be that all calls are forwarded except for calls having specific call related information. For example, a user may program call forwarding unit to evaluate caller ID data associated with incoming calls, and to forward all calls except those having specific caller ID data.

Programming unit 117 may also be coupled to line 107 to allow for remote programming according to the invention. According to this feature, a user can change the programming of call forwarding unit 113 while at a location separate from the location of telephone 105. For example, a user can call telephone 105 from a different location and program call forwarding unit 113 by activating predetermined key sequences on the user's distant phone. This programming activity may be facilitated by a prompting sequence provided by programming unit 117 according to a predetermined script.

Thus, for example, a user calling telephone 105 at the telephone number corresponding to line 107 can alert the programming unit 117 to the user's intent to reprogram call forwarding unit 113 by pressing a predetermined key sequence on the user's distant telephone to cause a predetermined dual tone multi-frequency (DTMF) signaling sequence to be received by programming unit 117. In response, programming unit 117 can output a prompt on line 107 to query the user. The user may respond to the query by activating appropriate keys on the user's distant telephone to provide corresponding DTMF signals to programming unit 117 in order to program the call forwarding unit 113.

Presume, for example, that telephone 105 is the user's home telephone, and the user initially programmed telephone 105 so that all incoming calls will be forwarded to the user's work telephone number. If the user is at the user's work location and departs the user's work location to go to a secondary location, such as a satellite office, the user can reprogram the call forwarding unit 113 to instead forward calls to the satellite office.

A mechanism is needed to allow reprogramming of the forwarding number without the reprogramming call being forwarded to the forwarding number. This functionality can be provided, for example, by having programming unit 117 or call forwarding unit 113 issue a phantom ring, special ring or other indication to an incoming caller, and providing the incoming caller some time to indicate that the incoming caller wishes to reprogram the forwarding function. Programming unit 117 and/or call forwarding unit 113 can then wait for either the reprogramming indication or the lapse of a predetermined period of time. If the predetermined period of time lapses, the incoming call will be forwarded according to the presently programmed forwarding instructions. If, on the other hand, the reprogramming indication is received, the incoming caller (presumably the user) will be able to reprogram the forwarding function by, for example, responding to scripted prompts issued by the programming unit.

The reprogramming indication can be, for example, a personal identification number entered by the user at the distant end phone and converted to DTMF tones interpretable by the programming unit 117. Alternatively, the reprogramming indication can be an audible signal, such as a spoken word, provided by the user into the distant end phone. Programming unit 117 may include spectral analysis or other voice recognition functionality to recognize the user's voice and enable reprogramming based on this analysis.

In an alternative embodiment, call forwarding unit 113 may further be programmed to determine if a call placed to a forwarding number is busy prior to forwarding the incoming call. If the forwarding number is busy, the call forwarding unit 113 will not handle the incoming call, and the incoming call will then be handled by the conventional telephone call handling elements 111.

In a related alternative embodiment, if the forwarding number is busy, call forwarding unit 113 may place a second forwarding call to a secondary forwarding number so that the incoming call is forwarded to the secondary forwarding number. For this purpose, call forwarding unit 113 may include a memory for storing primary and secondary forwarding numbers. Such a memory can of course be programmed via the programming unit 117. Further, such a memory is not limited to primary and secondary forwarding numbers, but may also include tertiary forwarding numbers and further forwarding numbers for use in forwarding the incoming call based, for example, on calls to all of the higher ranking forwarding numbers being busy.

Figure 2 provides a flowchart showing an example of operation of telephone 105 according to an exemplary scenario. At step 202 a user programs call forwarding unit 113 via programming unit 117 by activating input unit 119 by, for example, pressing specific keys on a keypad of telephone 105. An example of this programming is for the user to set call forwarding unit 113 to forward incoming calls to the user's work telephone number. The work telephone number can be set by entering the work telephone number into the keypad, or preferably can be set by selecting the work telephone number from a set of preprogrammed telephone numbers. This step of programming may be facilitated by a prompting script run by the processor or DSP within which programming unit 117 is realized. The script can query the user, for example, visually via a display on telephone 105, or audibly through a speaker on telephone 105.

At step 204, an incoming call to line 107 is received by call forwarding unit 113. At step 206, call forwarding unit 113 evaluates call related information, such as caller ID data, associated with the incoming call and determines whether the call should be forwarded. Caller ID data is typically located between the first and second rings of the incoming call. The determination at step 206 can be based, for example, on a comparison of the caller ID data received with the incoming call to a table of previously programmed telephone numbers or incoming caller identities for which call forwarding is either enabled or disabled.

If the call forwarding unit 113 determines at step 206 that the call should not be forwarded, then at step 208 the incoming call is handled by conventional telephone call handling elements 111 in a conventional manner. For example, an answering machine unit incorporated into or coupled to telephone 105 can process the incoming call by prompting the incoming caller to leave a message for the called party. Conventional telephone answering devices typically process an incoming call after a predetermined number of rings, such as four rings. Thus, according to this example, the call related information is received between the first and second rings, this information is then evaluated at step 206, and, based on the determination that the call should not be forwarded, the answering machine unit of the conventional telephone call handling elements 111 begins to process the incoming call after the fourth ring at step 208.

If, on the other hand, the call forwarding unit 113 determines at step 206 that the call should be forwarded, at step 210 the call forwarding unit 113 determines the forwarding number. According to this exemplary scenario, step 210 includes determining the user's work telephone number set by the user at step 202. In a more detailed example, step 210 can include a selection of the forwarding number from a plurality of potential forwarding numbers based on call related information such as caller ID data associated with the incoming call.

At step 212, the call forwarding unit 113 accomplishes a switch-hook operation to place the incoming call into a hold status. At step 214 the call forwarding unit 113 calls the forwarding number (the user's work number). At step 216 the call forwarding unit accomplishes another switch-hook operation to retrieve the incoming call from hold status and to complete the call forwarding process. The call to the user's home phone number is thus forwarded to the user's work phone number and can be received by the user. The user, at the user's work location, can be conscious of the fact that the incoming call was originally destined for the user's home telephone by noting that call related information such as caller ID data associated with the incoming call corresponds to the user's home telephone. After forwarding the call, at step 218 the call forwarding unit 113, or an element of the conventional telephone call handling elements 111, monitors the call status of the forwarded call, and at step 220 line 107 is returned to an on-hook status based on a determination that the call is complete.

If, after receiving the incoming call, the user plans to leave the user's work location, the user can remotely control the call forwarding feature of telephone 105 by calling the user's home telephone to engage programming unit 117. For example, if the user intends to return home, the user can simply disable the call forwarding function so that for a future incoming call the determination at step 206 is that the call should not be forwarded. This will result in the call being handled conventionally, such as being handled by an answering machine unit in conventional telephone call handling elements 111. If, on the other hand, the user intends to leave the user's work location to go to a satellite office, the user can change the forwarding number to that of the user's satellite office. This will result, for a future incoming call, in a decision at step 206 to forward the call, a determination at step 210 of the telephone number of the satellite office, and further processing according to steps 212-220.

## Claims

1. A method of automatically forwarding an incoming call in a customer premise equipment (CPE)(105), comprising the steps of:
temporarily placing the incoming call in a hold status (212);
calling a forwarding number (214); and
retrieving the incoming call from the hold status to connect the incoming call to the forwarding number (216).

2. A method as recited in claim 1, further comprising the steps of:
monitoring the call to the forwarding number (218); and
putting the CPE (105) in an on-hook status (220) upon call completion.

3. A method as recited in claim 1, further comprising the steps of:
receiving the incoming call (204); and
evaluating call related information associated with the incoming call (206),
wherein the step of calling the forwarding number (214) is carried out based on the evaluation.

4. A method as recited in claim 3, further comprising the steps of:
prompting an incoming caller; and
receiving forwarding directions from the incoming caller,
wherein the step of calling the forwarding number (214) is further carried out based on the forwarding directions.

5. A customer premise equipment (CPE)(105), comprising:
a flash unit adapted to place an incoming call into a hold status; and
a calling unit (113) adapted to call a forwarding number based on call related information associated with the incoming call.

6. A CPE as recited in claim 5, wherein the call related information is caller ID data.

7. A CPE as recited in claim 5, further comprising (117) an enabling unit adapted to selectively enable the calling unit.

8. A CPE as recited in claim 7, wherein the enabling unit (117) is adapted to be remotely controlled by a user, such that a user can remotely change a status of the enabling unit.

9. A CPE as recited in claim 7, wherein the enabling unit (117) and the calling unit (113) are adapted to be remotely controlled by a user, such that the user can remotely change a status of the enabling unit, and can remotely program the calling unit to operate based on particular call related information.

10. A customer premise equipment, comprising:
means for automatically placing an incoming call in a hold status (117);
means for automatically calling a forwarding number (113); and
means for automatically retrieving the incoming call from the hold status to connect the incoming call to the forwarding number (117).

11. A CPE as recited in claim 10, further comprising:
means for monitoring the call to the forwarding number (117); and
means for putting the CPE in an on-hook status upon call completion (117).

12. A CPE as recited in claim 10, further comprising:
means for prompting an incoming caller (117); and
means for receiving forwarding directions from the incoming caller (117),
wherein the means for automatically calling the forwarding number is adapted to function based on the forwarding directions.
